(19) **Europäisches Patentamt**

**European Patent Office**

**Office européen des brevets**

(11) **EP 0 439 011 B1**

(12) **EUROPÄISCHE PATENTSCHRIFT**

(45) Veröffentlichungstag und Bekanntmachung des Hinweises auf die Patenterteilung:
**26.03.1997  Patentblatt 1997/13**

(51) Int Cl.⁶: **G01S 7/48**, G01S 17/36, G01S 17/87

(21) Anmeldenummer: **91100115.4**

(22) Anmeldetag: **02.01.1991**

(54) **Abstandsmessgerät**

Distance measurement device

Télémètre

(84) Benannte Vertragsstaaten:
**DE FR GB IT NL**

(30) Priorität: **26.01.1990  DE 4002356**

(43) Veröffentlichungstag der Anmeldung:
**31.07.1991  Patentblatt 1991/31**

(73) Patentinhaber: **SICK AG**
**79183 Waldkirch (DE)**

(72) Erfinder: **Hug, Gottfried**
**W-7808 Waldkirch (DE)**

(74) Vertreter: **MANITZ, FINSTERWALD & PARTNER**
**Postfach 22 16 11**
**80506 München (DE)**

(56) Entgegenhaltungen:
**EP-A- 0 066 888          EP-A- 0 091 665**
**DE-A- 3 103 567**

- **PATENT ABSTRACTS OF JAPAN vol. 13, no. 109 (E-727)15. März 1989 & JP-A-63 280 482**

**Beschreibung**

Die Erfindung betrifft ein Abstandsmeßgerät nach dem Oberbegriff des Patentanspruchs 1.

Derartige Abstandsmeßgeräte (DE-OS 34 29 062) dienen dazu, beispielsweise im Bereich von 2 bis 10 m liegende Abstände von dem Abstandsmeßgerät auf elektronischem Wege zu messen, wobei die Meßgenauigkeit im Bereich einiger mm liegt. Auf diese Weise können die Füllstände von Behältern oder beispielsweise auch die Füllungsgrade von Regalen meßtechnisch erfaßt und auf elektronischem Wege zu einer Zentrale gemeldet werden.

Normalerweise verwenden derartige Abstandsmeßgeräte einen Meß- und einen Referenzempfänger, was die Gefahr eines unterschiedlichen Driftens der beiden Empfangsschaltungen mit sich bringt und außerdem zu nachteiligen Einflüssen unterschiedlicher Sperrschichtkapazitäten bzw. Reaktionszeitänderungen der beiden für den Empfang verwendeten Photodioden führt. Die Verwendung nur einer Lichtsendediode bringt andererseits das Problem mit sich, daß ein Übersprechen zwischen Meß- und Referenzstrecke nicht ausgeschlossen werden kann.

Aus der EP 0 066 888 A ist ein Entfernungsmeßverfahren bekannt, bei dem die Laufzeit eines Meßlichtimpulses ausgewertet wird, der aufgrund eines Trigger-Signals von einem Sender emittiert, vom Zielgegenstand zum Meßwert reflektiert und dort durch einen Empfänger in ein elektrisches Signal umgesetzt wird, das zur Erzeugung eines Stop-Signals für eine Signal-Laufzeitmessung dient, die in Abhängigkeit vom Emissionszeitpunkt des Meßlichtimpulses gestartet worden ist. Dabei wird mindestens eine Signal-Laufzeitmessung über die Meßstrecke und getrennt hiervon mindestens eine Signal-Laufzeitmessung über eine geräteinterne Referenzstrecke durchgeführt und der Entfernungsmeßwert aus der Differenz der wenigstens zwei Signal-Laufzeitwerte ermittelt.

Aus der EP 0 091 665 A ist ein Verfahren zur Abstandsmessung bekannt, bei dem moduliertes Licht von einer Lichtquelle ausgesandt, von einem Punkt, dessen Abstand von der Lichtquelle zu ermitteln ist, reflektiert und von einem Empfängerelement empfangen wird. Der zu ermittelnde Abstand wird dabei aus der Phasendifferenz zwischen dem ausgesandten und dem empfangenen Lichtsignal berechnet.

Die Aufgabe der Erfindung besteht darin, ein Abstandsmeßgerät zu schaffen, bei dem

- die Empfangsschaltung driftunempfindlich ist,

- das Signal/Rauschverhältnis verbessert wird und

- mit dem eine extrem hohe Übersprechdämpfung von Meß- und Referenzkanal möglich ist, wobei

- Meß- und Referenzstrecke weitgehend unabhängig vom Ort ihres Anfangs gewählt werden können.

Zur Lösung sind die Merkmale des Anspruchs 1 vorgesehen.

Erfindungsgemäß weist also der Lichtempfänger nur ein einziges opto-elektronisches Licht-Empfangselement auf, welches abwechselnd die Lichtwellenzüge von der Meßstrecke und von der Referenzstrecke empfängt. Dieser Empfang erfolgt zeitlich nacheinander.

Die Problematik des Phasenvergleichs dieser zeitlich nacheinander ausgesandten Lichtwellenzüge wird erfindungsgemäß dadurch gelöst, daß die Empfangssignale einer multiplikativen Mischstufe zugeführt werden, die auch ein in der Frequenz identisches und in der Phase bekanntes (90°-Raster) einstellbares Wellenzugsignal empfängt. Auf diese Weise kann eine Absolutmessung der Phase sowohl des über die Meßstrecke gegangenen Wellenzug-Signals als auch des über die Referenzstrecke zum Empfänger gelangenden Wellenzugsignals durchgeführt werden.

Am Ausgang der Mischstufe bzw. des Approximationsfilters erscheinen somit zeitlich nacheinander für die Absolutphase sowohl des Meßstreckenwellenzugs als auch des Referenzstreckenwellenzugs repräsentative Signale, welche anschließend im Mikrocomputer problemlos korreliert werden können.

Nachdem nur ein einziger Empfangskanal vorhanden ist und sämtliche später im Mikrocomputer voneinander subtrahierten Phasensignale mit Ausnahme der beiden komplementär geschalteten Lichtquellen sämtliche Leitungen und Bauelemente gleichermaßen durchlaufen, ist die Empfangsschaltung driftunempfindlich.

Aufgrund der im Approximationsfilter stattfinden den Integration ist das Signal/Rauschverhältnis der Empfangssignale verbessert, weil hierdurch das Nutzsignal aus dem Rauschuntergrund besser herausgehoben wird.

Die Übersprechdämpfung von Meß- und Referenzkanal ist wegen den komplementär schaltenden Lichtquellen extrem hoch.

Meß- und Referenzstrecke können weitgehend unabhängig vom Ort ihres Anfangs gewählt werden, da ein willkürlich gewählter Anfangsort aufgrund der Phasenabsolutmessung mittels der Mischstufe ohne weiteres bei der späteren Auswertung berücksichtigt werden kann.

Weiterhin können mit der Erfindung folgende Vorteile erzielt werden:

- Die Empfangsschaltung ist driftunempfindlich; Sperrschichtkapazitäts- bzw. Reaktionszeitänderungen der im Empfang verwendeten Photodiode werden vom Referenzpfad erfaßt.

- Es ist ein einfacher Betrieb mit Avalanche-Photodioden möglich; eine temperaturabhängige Spannungsnachführung verursacht Parameteränderungen der betreffenden Photodiode, welche jedoch von dem Referenzpfad erfaßt werden. Erfindungsgemäß ist nur eine Avalanche-Photodiode nötig.

- Das Signal-Rauschverhältnis wird verbessert; die Photodiodenkapazität kann erfindungsgemäß in einen Schwingkreis hoher Güte eingebunden werden, während der Realteil (Trans-impedanzwiderstand) bei gleichzeitiger hoher Arbeitsfrequenz vergrößert wird. Eine Phasendrift wird vom Referenzpfad erfaßt.

- Die Erzielung einer extrem hohen Übersprechdämpfung von Meß- und Referenzkanal ist möglich; der jeweils ausgeschaltete Laser kann insbesondere dann, wenn er gemäß Anspruch 4 mit einer negativen Spannung beaufschlagt ist, schaltungsbedingt kein optisches Signal aussenden. Die Übersprechdämpfung wird nur noch von der optischen Trennung zwischen Meß- und Referenzstrecke bzw. von elektromagnetischen Einkopplungen des Senders auf die Empfangseinrichtung bestimmt.

- Eine einfache Realisierung einer Kollimationsoptik für den Meßkanal ist auf diese Weise möglich; es wird keine Strahlaufspaltung für einen Referenzpfad benötigt. Die Referenzstrecke wird durch den Raum zwischen der Referenz-Laserdiode und der Empfangs-Photodiode bestimmt.

- Die Halbleiterumschaltung kann erfindungsgemäß vereinfacht werden; an die Halbleiterschalter werden in bezug auf die Sperrdämpfung keine hohen Anforderungen gestellt. Die Laufzeitdifferenzen des Schaltelementes können durch gute Anpassung der parasitären Größen wie Serienwiderstand und Sperrkapazität durch die Verwendung einer Doppeldiode sehr klein gehalten werden. Die Umschaltung kann mit hohen Pegeln erfolgen, was störtechnisch von Vorteil ist.

- Es wird eine geringe Laufzeitdrift erzielt; für Meß- und Referenzkanal können bis zur Diodenumschaltung gemeinsame Modulationspfade benutzt werden. Durch die hohe Modulationsbandbreite von Meß- und Referenzlaser (1 GHz) und vergleichbare Betriebsbedingungen (Temperatur, Arbeitspunkt) wird die resultierende Laufzeitdifferenz vernachlässigbar klein.

- Die beiden Laserdioden können räumlich so angeordnet werden, wie es eine optimale Lichtführung auf Meß- und Referenzstrecke erfordert; beide Lichtwege können auf diese Weise mit hoher Lichtenergie versorgt werden, wodurch äußere Störeinflüsse minimiert werden.

Vorteilhafte Weiterbildungen der Erfindung sind durch die Ansprüche 2 und 3 gekennzeichnet.

Die besonders gute Sperrung der gerade inaktivierten Laser-diode kann durch die Maßnahmen der Ansprüche 3 bis 5 weiter verbessert werden.

Die Ansprüche 6 bis 8 beschreiben vorteilhafte Ausführungsbeispiele für die Schaltung und Regelung der Laserdioden.

Bevorzugte Ausführungsformen für die Hochfrequenzschaltung sind durch die Ansprüche 9 bis 11 definiert.

Eine besonders zweckmäßige Intensitätsregelung für die Laser-dioden ergibt sich aus Anspruch 12.

Dieses Ausführungsbeispiel wird zweckmäßigerweise gemäß Anspruch 13 weitergebildet.

Die Erfindung betrifft also eine Vorrichtung zur Selbstkalibrierung von Distanzmeßvorrichtungen nach dem Laufzeitverfahren.

Erfindungsgemäß wird eine laufzeitneutrale, elektronische Umschaltung zwischen einem Meßweg und einem Referenzweg durch zwei optoelektronische Sender, vorzugsweise Halbleiter-Laserdioden, vorgesehen. Für die Umschaltvorrichtung können Halbleiterschalter, insbesondere Schalterdioden, verwendet werden. Wird der jeweilige Laser vom Arbeitsstromkreis getrennt, so sorgt eine Schalterdiode gleichzeitig für eine Entkopplung vom Modulationskreis mit der entsprechenden Hochfrequenzinformation. Um im ausgeschalteten Zustand jegliche Lichtemission mit Modulationsanteil zu unterbinden, wird dem Laser eine Hilfsspannung in Sperrichtung zugeführt. Der aktive Schaltvorgang wird über zwei Hilfsschalter, vorzugsweise Transistorschalter, im niederfrequenten Teil des Regelkreises ausgelöst. Diese können gleichzeitig als Stellglieder eines beiden Lasern gemeinsamen PI-Reglers herangezogen werden. Der Regelkreis wird über eine Stromsummenschaltung beider Monitordioden geschlossen.

Erfindungsgemäß werden also die Nachteile, wie sie bei einer Referenznahme durch einen Referenzempfänger entstehen würden, vermieden. Die hohe Modulationsbandbreite der Laserdioden in Verbindung mit Diodenschaltern ermöglicht eine gute Laufzeitkonstanz und damit eine geringe Offsetdrift der Selbstkalibrierung. Durch Wegfall des einen Referenzempfängers kann der Empfangspfad schmalbandig (selektiv) und damit unempfindlicher gegenüber äußeren Störeinflüssen bzw. Rauschen gemacht werden. Die Detektivität kann dadurch verbessert werden.

Die Erfindung wird im folgenden beispielsweise anhand der Zeichnung beschrieben; in dieser zeigt:

Fig. 1    eine blockschaltbildartige Gesamtansicht eines erfindungsgemäßen Abstandsmeßgerätes,

Fig. 2    eine etwas detailliertere, schematische Darstellung des in Fig. 1 gezeigten Lichtsenders und

Fig. 3    ein Schaltbild des in Fig. 2 nur schematisch
         dargestellten Lichtsenders.

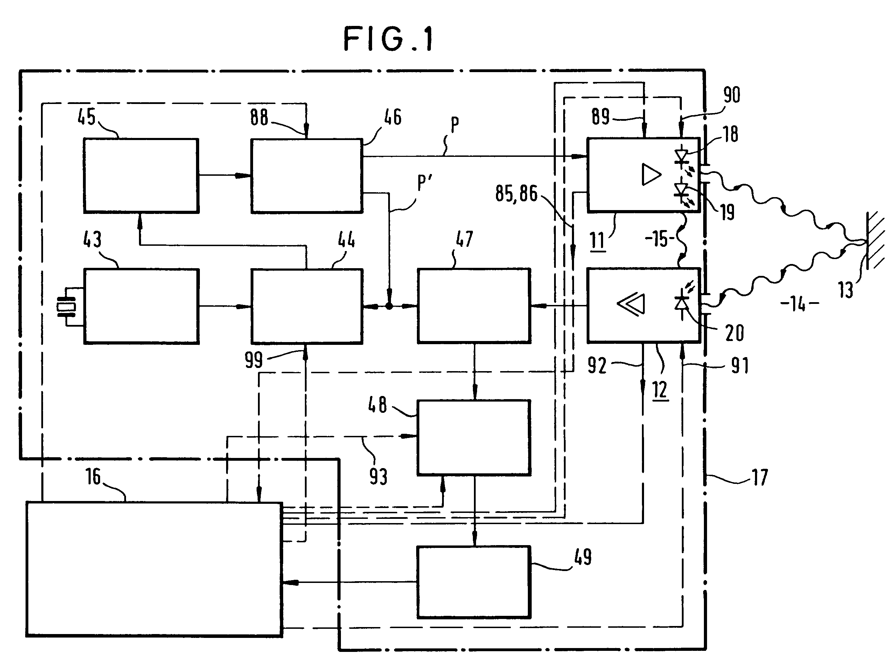

Nach Fig. 1 erzeugt ein Mutteroszillator 43 eine Frequenz von z.B. 10 MHz, die über einen Phasenvergleicher 44 einem variablen Oszillator 45 zugeführt ist, der an einen Digital-Phasenshifter 46 angeschlossen ist. Der eine Ausgang P' des Digital-Phasenshifters 46 ist zum zweiten Eingang des Phasenvergleichers 44 zurückgeführt, wodurch eine Phase Lock Loop gebildet wird, aufgrund der der variable Oszillator eine Frequenz von 300 MHz an den Digital-Phasenshifter 46 abgibt. Die Frequenzeinstellung kann dadurch herbeigeführt werden, daß dem Phasenvergleicher 44 bei 87 von einem Mikroprozessor 16 ein geeignetes Frequenzeinstellungssignal zugeführt wird.

Das Ausgangssignal P' des Digital-Phasenshifters 46 wird außerdem dem einen Eingang einer Mischstufe 47 zugeführt, die dieses Signal mit einem von einem Lichtempfänger 12 kommenden Signal additiv oder multiplikativ mischt.

An den Ausgang der Mischstufe 47 ist ein Approximationsfilter 48 angeschlossen, welches besonders schmalbandig ist. An seinem Ausgang erscheint das Integral PxP', wobei P das vom Digital-Phasenshifter 46 zu einem Lichtsender 11 abgegebene Lichtwellenzug-Signal ist. Die Phaseneinstellung des Digital-Phasenshifters 46 erfolgt bei 88 vom Mikroprozessor 16 aus.

Im Digital-Phasenshifter 46 werden zeitlich nacheinander vier im 90°- Raster einstellbare Phasenpaare mit einer Frequenz von 75 MHz erzeugt und als entsprechende Wellenzugsignale P bzw. P' an den Sender 11 bzw. den Mischer 47 weitergeleitet.

Im Sender 11, der vom Mikroprozessor 16 bei 89 mit Helligkeitssollwerten und bei 90 mit Schaltsignalen in der weiter unten beschriebenen Weise gesteuert wird, sind zwei vom Mikroprozessor 16 über den Anschluß 89 komplementär geschaltete Laserdioden 18, 19 vorgesehen, von denen die eine (18) über eine Meßstrecke 14 einen hochfrequent modulierten Lichtwellenzug zu einem Ziel 13 aussendet, von welchem das Licht zum unmittelbar neben dem Lichtsender 11 angeordneten Empfänger 12 zurückreflektiert wird, in welchen nur eine einzige Photodiode 20 angeordnet ist, die sowohl das Licht von der Meßstrecke 14 als auch von einer im gleichen Gehäuse 17 wie Lichtsender 11 und Lichtempfänger 12 untergebrachten Referenzstrecke 15 empfängt, die durch die zweite Laserdiode 19 beschickt wird. Im Lichtempfänger 12 befindet sich auch ein Verstärker, dessen Ausgangssignal an die Mischstufe 47 angelegt ist.

Die Empfangskreisabstimmung im Empfänger 12 wird bei 91 vom Mikroprozessor 16 vorgenommen. Weiter führt vom Lichtempfänger 12 eine Steuerleitung 92 zum Mikroprozessor 16, aufgrund der von diesem die Dynamikauswertung vorgenommen wird.

Auch das Approximationsfilter 48 wird über eine Steuerleitung 93 vom Mikroprozessor 16 beaufschlagt und bezüglich seiner Bandbreite gesteuert.

Der Ausgang des Approximationsfilters 48 ist über eine Analog-Digital-Schaltung 49 an den Mikroprozessor 16 angelegt, welcher die Signalauswertung in der folgenden Weise durchführt:

Jeder der vom Digital-Phasenshifter 46 abgegebenen und jeweils um 90° zueinander phasenversetzten Wellenzüge wird einmal direkt (P') auf den einen Eingang der Mischstufe 47 und zum anderen bei P über den Sender 11 und abwechselnd die Meßstrecke 14 oder die Referenzstrecke 15 sowie den Lichtempfänger 12 an den anderen Eingang der Meßstufe 47 gegeben, wo eine Multiplikation mit dem Signal P' stattfindet. Aufgrund der Phasenverschiebung zwischen den über die Meßstrecke 14 und den über die Referenzstrecke 15 gegangenen Lichtwellenzüge werden am Ausgang des Approximationsfilters verschiedene Phasensignale erscheinen, aus denen auf die unterschiedlichen Laufzeiten der Lichtwellenzüge über die Meßstrecke 14 einerseits und die Referenzstrecke 15 andererseits geschlossen werden kann, was im Mikroprozessor 16 ausgewertet wird. Unter Berücksichtigung der Lichtgeschwindigkeit kann so der Abstand des Gehäuses 17 vom Ziel 13 ermittelt werden.

Erfindungsgemäß ist im Lichtempfänger 12 nur eine einzige sowohl von der Meßstrecke 14 als auch von der Referenzstrecke 15 her beaufschlagte Photodiode 20 vorgesehen.

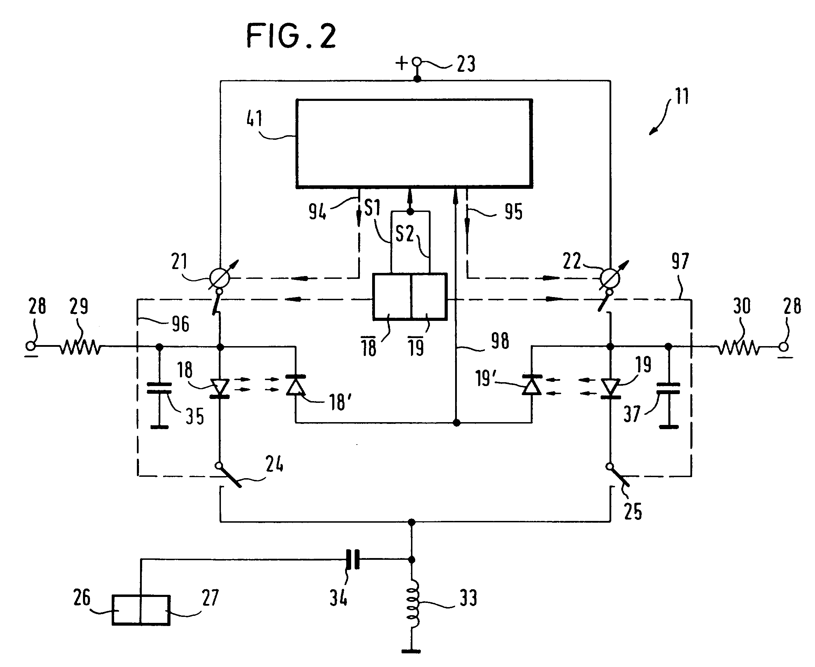

Nach Fig. 2 besitzt der Lichtsender 11 zwei Laserdioden 18, 19, von denen die eine die Meßstrecke 14 und die andere die Referenzstrecke 15 mit einem gebündelten Lichtstrahl versorgt.

Nach Fig. 2 sind die Laserdioden 18, 19 mit ihren Pluspolen über jeweils einen Hilfsschalter 21, 22 mit zugeordnetem Regler bei 23 an eine positive Speisegleichspannungsquelle mit einer Spannung von beispielsweise +5,2 V angeschlossen.

Die negativen Pole der Laserdioden 18, 19 sind über einen Hochfrequenzschalter 24 bzw. 25 an eine geerdete Induktivität 33 angelegt, die Teil eines Hochpasses bildet, zu dem auch ein Kondensator 34 gehört, der von schematisch angedeuteten Hochfrequenz-Modulationsspannungsklemmen 26, 27 beaufschlagt ist, denen die Wellenzugsignale P (Fig.1) zugeführt werden.

An den positiven Pol der Laserdioden 18, 19 ist über jeweils einen hochohmigen Widerstand 29 bzw. 30 und eine Klemme 28 eine negative Hilfsspannung von z.B. -12 V angeschlossen.

Die Hilfsschalter mit Regelung 21, 22 werden über an Klemmen $\overline{18}$ bzw. $\overline{19}$ angelegte Schaltsignale komplementär zueinander geschaltet. Wenn - wie in Fig. 2 dargestellt - der Schalter 21 geschlossen ist, dann ist der andere Schalter 22 offen und umgekehrt.

Jeder Laserdiode 18, 19 ist eine Monitordiode 18' bzw. 19' zugeordnet, die abwechselnd einen PI-Regler 41 ansteuern, dem außerdem von den Schaltklemmen $\overline{18}$ bzw. $\overline{19}$ entsprechend der Stellung der Hilfsschalter 21, 22 abwechselnd zugeschaltete Sollwerte S1 bzw. S2 zugeführt sind.

Der PI-Regler 41 gibt bei 94, 95 Regelsteuersignale für den Regelteil der Schalter 21, 22 ab. Auf diese Weise kann der Strom zu den Laserdioden 18, 19 so eingeregelt werden, daß die Lichtintensität der Laserdioden 18, 19 konstant ist. Über die Sollwertzuführung S1, S2 kann weiter dafür gesorgt werden, daß einer Degradation der Laserdioden 18, 19 durch eine stärkere Öffnung der Regler der Schalter 21, 22 entgegengewirkt wird. Auch Voreinstellungen bestimmter Lichtintensitäten sind durch eine Veränderung der Sollwerte S1 und S2 möglich.

Kondensatoren 35, 37 zwischen den Pluspolen der Laserdioden 18, 19 und Masse stellen einen Hochpaß für die über die Diodenschalter 24, 25 zugeführte Hochfrequenz-Modulationsspannung dar.

Die Schaltung nach Fig. 2 arbeitet wie folgt:

Über die Schaltklemmen 18, 19 werden Schaltsignale für die Schalter 21, 22 in der Weise zugeführt, daß stets der eine Schalter geschlossen, der andere offen ist. Synchron damit werden auch die Hochfrequenzschalter 24, 25 geschlossen bzw. geöffnet, was durch gestrichelte Kopplungslinien 96, 97 angedeutet ist. Sofern die Schalter 21, 24 (siehe linke Darstellung in Fig. 2) geschlossen sind, liegt die zugeordnete Laserdiode 18 zwischen der positiven Speisespannungsklemme 23 und Masse und wird daher eingeschaltet. Über den Hochpaß 33, 34, 35 wird gleichzeitig der durch die Laserdiode 18 fließende Gleichstrom mit einer entsprechenden Hochfrequenzspannung von z.B. 75 MHz moduliert.

Nachdem auf diese Weise viele Lichtwellenzüge geeigneter Länge über die Meßstrecke 14 zur Empfangsdiode 20 (Fig.1) geschickt worden sind, schaltet das Schaltsignal an der Schaltklemme $\overline{18}$ den Schalter 21 und damit auch den Schalter 24 in die Offenstellung zurück, während ein komplementäres Schaltsignal an der Schaltklemme $\overline{19}$ den Schalter mit Regler 22 sowie den Hochfrequenzschalter 25 schließt. Nunmehr setzt sich das Arbeitsspiel an der Laserdiode 19 entsprechend fort, und die Lichtwellenzüge werden über die Referenzstrecke 15 (Fig. 1) geschickt.

Je nachdem, welche Laserdiode (18 oder 19) aktiv ist, gibt die zugeordnete Monitordiode 18' oder 19' über eine gemeinsame Leitung 98 ein Istwert-Signal an den PI-Regler 41 ab. Gleichzeitig sorgen die Schaltsignale an den Schaltklemmen $\overline{18}$, $\overline{19}$ dafür, daß auch das der betreffenden Laserdiode 18 oder 19 zugeordnete Sollwertsignal S1 oder S2 dem PI-Regler zugeleitet wird, welches dann den Regler des betreffenden Schalters 21 oder 22 entsprechend so einstellt, daß die Laserdioden 18, 19 mit einer vorbestimmten Intensität Lichtwellenzüge abgeben.

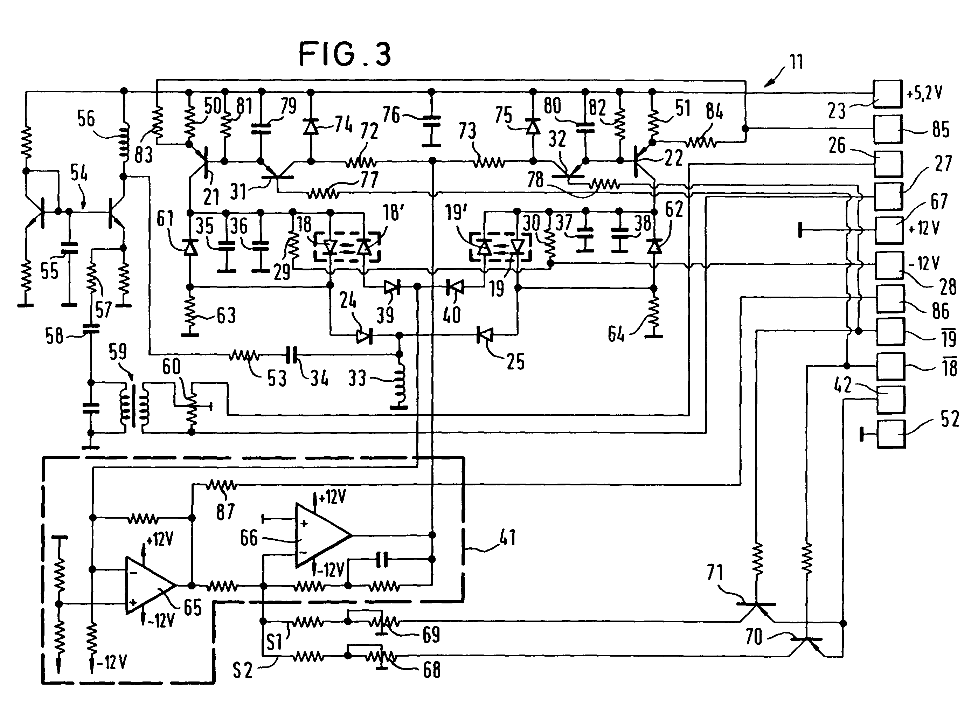

Ein nach dem Prinzipschaltbild der Fig. 2 arbeitendes Schaltungsbeispiel wird im folgenden anhand von Fig. 3 erläutert.

Die beiden Laserdioden 18, 19 sind einerseits über einen Schalt-Regeltransistor 21 bzw. 22 und einen in dessen Emitterkreis eingeschalteten Widerstand 50, 51 an die auf einem Potential von +5,2 V liegende positive Speisegleichspannungsklemme 23 angelegt. Der negative Pol der Laserdioden 18, 19 ist andererseits über jeweils eine einen Hochfrequenzschalter bildende in der gleichen Richtung wie die Laserdioden 18, 19 eingeschaltete Schaltdiode 24 bzw. 25 und eine gemeinsame Induktivität 32 an Masse angelegt, deren Potential über eine Klemme 52 zugeführt ist.

Die Induktivität 33 ist Bestandteil eines auch einen Kondensator 34 aufweisenden Hochpaßfilters, welches über einen Widerstand 53 an eine Modulationstreiberstufe 54 angeschlossen ist, die aus zwei mittels der Basen miteinander verbundenen Transistoren und den zugeordneten Widerständen besteht und ebenfalls zwischen Masse und die Speisegleichspannungsklemme 23 geschaltet ist. Ein Kondensator 55 sowie eine Induktivität 56 bewirken eine Fernhaltung der Hochfrequenzmodulationsspannung von der Speisegleichspannungsleitung. An den Emitter des einen Transistors der Treiberstufe 54 ist über einen Widerstand 57 und einen Kondensator 58 die Ausgangsspannung eines Übertragers 59 angeschlossen, dessen Eingangswicklung über ein Potentiometer 60 an die Hochfrequenz-Modulationsspannungsklemmen 26, 27 angelegt ist, der die Wellenzugsignale P (Fig.1) zugeführt sind. Die positive Zuleitung zu den Laserdioden 18, 19 ist über Hochfrequenz-Ableitungskondensatoren 35, 36 bzw. 37, 38 an Masse und über hochohmige Widerstände 29 bzw. 30 an eine Klemme 28 für die Zuführung einer Hilfsspannung von -12 V angelegt.

Der Verbindungspunkt zwischen den Laserdioden 18, 19 und den zugeordneten Schaltdioden 24, 25 ist über eine entgegen den Laserdioden 18, 19 geschaltete Hilfsdiode 61 bzw. 62 ebenfalls an die positive Zuleitung der Laserdioden 18, 19 angeschlossen. Der von den Transistoren 21, 22 abgewandte Pol der Hilfsdioden 61, 62 ist außerdem über einen Widerstand 63, 64 geerdet.

Jeder Laserdiode 18, 19 ist eine Monitordiode 18', 19' zugeordnet, die einerseits an die positive Zuleitung und andererseits über in der gleichen Richtung wie die Dioden 24, 25 eingeschaltete Dioden 39, 40 gemeinsam an den Eingang des PI-Reglers 41 angelegt sind, welcher zwei hintereinandergeschaltete Operationsverstärker 65 bzw. 66 enthält. Die Betriebsspannungen werden in der dargestellten Weise von der auf -12 V liegenden Klemme 28 und einer weiteren auf +12 V liegenden Klemme 67 abgeleitet. Der Minus-Eingangsklemme des Operationsverstärkers 66 werden abwechselnd zwei Sollsignale S1, S2 zugeführt, die über parallel geschaltete Sollwert-Einstellungspotentiometer 68 bzw. 69 und Schalttransistoren 70 bzw. 71 von einer eine exakte Konstantgleichspannung führenden Klemme 42 abgeleitet sind. Die Gleichspannung wird den Potentiometern 68, 69 über Schalttransistoren 70, 71 zugeführt, die von den bei $\overline{18}$, $\overline{19}$ anliegenden Schaltsignalen synchron mit den Laserdioden 18, 19 geöffnet und geschlossen werden. Auf diese Weise wird beim Einschalten einer jeden Laserdiode 18 oder 19 dem Eingang des Operationsverstärkers 66 gerade der für die betreffende Laserdiode vorgesehene Sollwert S1 oder S2 zugeführt.

Der Ausgang des PI-Reglers 41 ist über Widerstände 72 bzw. 73 dem Kollektor eines Schalttransistors 31 bzw. 32 zugeführt, der über eine Diode 74 bzw. 75 in der dargestellten Weise an die positive Versorgungsgleichspannung +5,2 V angelegt ist. Die positive Speisegleichspannungsleitung ist über einen Kondensator 76 zur weiteren Hochfrequenzentkopplung geerdet.

Dem Kollektor der Schalttransistoren 31 bzw. 32 wird jeweils über einen Widerstand 77 bzw. 78 von den Klemmen $\overline{18}$ bzw. $\overline{19}$ die Schaltspannung für die Laserdioden 18, 19 zugeführt.

Die Emitter der Schalttransistoren 31, 32 sind über Kondensatoren 79 bzw. 80 und Widerstände 81 bzw. 82 an die positive Gleichspannungsklemme 23 angelegt. Weiter ist er mit der Basis des Transistors 21 bzw. 22 verbunden, dessen Emitter wie oben bereits erwähnt über einen Widerstand 50 bzw. 51 an der positiven Speisegleichspannung +5,2 V liegt und dessen Kollektor mit der positiven Zuleitung für die Laserdioden 18 bzw. 19 verbunden ist.

Von den Emittern der Regel-Schalttransistoren 21 bzw. 22 wird über Widerstände 83 bzw. 84 eine Spannung abgegriffen und zu einer Klemme 85 geführt. Dieses Signal ist für den durch die Laserdioden 18, 19 fließenden Strom repräsentativ und kann im Mikroprozessor 16 (Fig. 1) zur Überwachung des Regelkreises bezüglich Einhaltung der Laserschutzklasse oder der Degradation beider Laser herangezogen werden. Zu diesem Zweck ist auch eine weitere Überwachungsklemme 86 vorgesehen, die über einen Widerstand 87 an den Ausgang des Operationsverstärkers 65 des PI-Reglers 41 angelegt ist. Da dieses Signal von der Lichtbeaufschlagung der Monitordioden 18', 19' abhängig ist, ist es repräsentativ für die Helligkeit der Laserdioden 18, 19 bei einem bestimmten angelegten Strom, der wiederum an der Klemme 85 gemessen werden kann. Auf diese Weise kann der Mikroprozessor 16, an den die Klemmen 85, 86 angeschlossen sind, feststellen, wenn beispielsweise für einen bestimmten Diodenstrom die Lichtleistung nachläßt, was dann bei der Auswertung Berücksichtigung finden kann.

Die Funktion der beschriebenen Schaltung ist wie folgt:

Über die Laserdioden-Schaltklemmen $\overline{18}$ und $\overline{19}$ werden vom Mikroprozessor 16 abwechselnd Einschaltsignale für die Laserdioden 18 bzw. 19 abgegeben, welche über die Schalttransistoren 31 bzw. 32 die Regel-Schalttransistoren 21, 22 öffnen, und zwar jeweils so, daß zu einer Zeit immer nur einer der Transistoren 21 oder 22 geöffnet, der andere dagegen geschlossen ist. Nunmehr wird über den Widerstand 50 der Laserdiode 18 oder über den Widerstand 51 der Laserdiode 19 der für das Aufleuchten erforderliche Gleichstrom zugeführt, der über die Schaltdioden 24 oder 25 und die Induktivität 33 nach Masse abfließt.

Aufgrund der den Widerständen 29 bzw. 30 zugeführten negativen Spannung von -12 V ist jeweils nur diejenige Schaltdiode 24 oder 25 geöffnet, deren Laserdiode 18 oder 19 über den zugeordneten Transistor 21 oder 22 eine positive Spannung zugeführt ist. Hierdurch entfällt nämlich der von der negativen Spannung durch die Dioden 61 bzw. 62 und die Widerstände 63 bzw. 64 gezogenen Strom, welcher den positiven Pol der Schalttransistoren 24 oder 25 negativ gemacht hatte, so daß die betreffende Schaltdiode sperrte. Die Schaltdioden 24, 25 öffnen und schließen also synchron mit den zugehörigen Laserdioden 18, 19.

Sobald eine Laserdiode z.B. 18 aktiv ist, kann über die nunmehr offene Schaltdiode, z.B. 24, vom Hochpaß 33, 34 her die bei 26, 27 angelegte Hochfrequenz-Modulationsspannung zu der zugeordneten Laserdiode, z. B. 18, gelangen. Sie wird über die Kondensatoren 35, 36 oder 37, 38 nach Masse abgeführt. Auf diese Weise erfolgt die Modulation der Laserdioden 18, 19, während sie von einer sie zum Leuchten bringenden Gleichspannung beaufschlagt sind. Die Modulationstiefe ist so groß, daß die Dioden während der Modulation in Rhythmus der zugeführten Hochfrequenz-Modulationsspannung erlöschen und wieder aufleuchten und kann am Potentiometer 60 eingestellt werden.

Aufgrund des Anschlusses des Kollektors der Transistoren 31, 32 an den Ausgang des PI-Reglers 41 wird der Öffnungsgrad der Regel-Schalttransistoren 21 bzw. 22 gerade so eingeregelt, daß die Laserdioden 18 bzw. 19 die an den Potentiometern 68 bzw. 69 eingestellte Lichtstärke annehmen. Die Regel-Schalttransistoren 21, 22 erfüllen also eine Doppelfunktion als Stellglieder des Regelkreises wie auch als Schalter für die Zu- und Abschaltung der Laserdioden 18, 19. Erfindungsgemäß führen also die Schaltdioden 24, 25 sowohl den Gleich-Laserstrom als auch den überlagerten Modulations-Hochfrequenzstrom. Es handelt sich um Hochfrequenzschalter, weil sie beim Abschalten der zugeordneten Laserdiode 18 oder 19 öffnen und beim Zuschalten von selbst wieder schließen.

Wesentlich ist auch noch, daß bei abgeschalteten Laserdioden 18 bzw. 19 die positiven Zuleitungen die Laserdioden über die Widerstände 29, 30 an eine negative Hilfsspannung angelegt sind, so daß in diesen Perioden eine die Laserdioden vollständig sperrende Spannung an ihnen anliegt. Im abgeschalteten Zustand der Laserdioden 18 oder 19 liegt jeweils ein Spannungsteiler über den Widerstand 63, die Diode 61 und den Widerstand 29 bzw. den Widerstand 64, die Diode 62 und den Widerstand 30 vor. Die Dioden 61, 62 begrenzen diese Hilfsspannung auf einen zulässigen Wert. Dadurch werden die gewünschten Eigenschaften, nämlich insbesondere das Aufleuchten der Laserdioden nur in den gewünschten Perioden unterstützt.

Die Helligkeit der beiden Laserdioden kann durch die Potentiometer 68 oder 69 voreingestellt werden.

Die Regelbandbreite des PI-Reglers 41 ist sehr viel kleiner als die Modulationsfrequenz.

Während jeder Einschaltperiode einer der Laserdioden 18, 19 werden einige tausend hochfrequenzmodulierte Lichtwellenzüge über die Meßstrecke 14 bzw. die Referenzstrecke 15 übertragen.

**Patentansprüche**

1. Abstandsmeßgerät mit einem photoelektrischen Lichtempfänger (12) und einem vorzugsweise daneben angeordneten photoelektrischen Lichtsender (11), der Lichtwellenzüge abwechselnd über eine Meßstrecke (14) und ein an deren Ende angeordnetes reflektierendes Ziel (13), dessen Abstand vom Lichtsender (11)/Lichtempfänger (12) gemessen werden soll, und über eine vorzugsweise innerhalb des Gehäuses (17) zwischen Lichtsender (11) und Lichtempfänger (12) vorgesehene Referenzstrecke (15) bekannter Länge zu dem Lichtempfänger (12) schickt, sowie mit einer Auswerteelektronik, die einen Mikroprozessor (16) enthält und die vom Lichtempfänger (12) abwechselnd empfangenen Lichtwellenzüge auf die Differenz der Laufzeit über die Meßstrecke (14) einerseits und die Referenzstrecke (15) andererseits auswertet und daraus unter Berücksichtigung der Lichtgeschwindigkeit und der bekannten Länge der Referenzstrecke (15) den Abstand des Lichtsenders (11)/Lichtempfängers (12) vom Ziel (13) ermittelt, bei dem der Lichtsender (11) zwei elektronisch komplementär schaltbare, optoelektronische Licht-Sende-Elemente, insbesondere Licht-Sende-Halbleiterelemente und vorzugsweise Laserdioden (18, 19) enthält, von denen die eine (18) die Lichtwellenzüge auf die Meßstrecke (14), die andere (19) die Lichtwellenzüge auf die Referenzstrecke (15) schickt, und bei dem Lichtempfänger (12) ein sowohl die Lichtwellenzüge von der Meßstrecke (14) als auch die Lichtwellenzüge von der Referenzstrecke (15) empfangen-des optoelektronisches Licht-Empfangs-Element, insbesondere Licht-Empfangs-Halbleiterelement, vorzugsweise Photodiodenelement (20) enthält, das an die Auswerteelektronik angeschlossen ist,
dadurch **gekennzeichnet**,

daß die vom Lichtsender (11) ausgesandten und von einer Oszillatoranordnung (43, 44, 45, 46) abgegebenen Lichtwellenzüge hochfrequent moduliert sind,
daß das Licht-Empfangs-Element (20) an den einen Eingang einer multiplikativ arbeitenden Mischstufe (47) der Auswerteelektronik angeschlossen ist, an deren anderen Eingang das eine Ausgangs-Wellenzugsignal (P') eines zeitlich nacheinander vier im 90°-Raster einstellbare, je Modulationsfrequenz aufweisende Phasenpaare erzeugenden Digital-Phasen-Shifters (46) angelegt ist, dessen anderes Ausgangswellenzugsignal (P) an den Lichtsender (11) weitergeleitet ist,
daß an den Ausgang der Mischstufe (47) ein das Integral (PxP') des Ausgangsproduktes der beiden Ausgangs-Wellenzugsignale (P, P') bildendes besonders schmalbandiges Approximationsfilter (48) angeschlossen ist, wobei die am Ausgang des Approximationsfilters (48) erscheinenden Ausgangssignale in dem in der Auswerteelektronik enthaltenen Mikroprozessor (16) auf die Differenz der Laufzeiten der Lichtwellenzüge über die Meßstrecke (14) einerseits und die Referenzstrecke (15) andererseits ausgewertet werden.

2. Abstandsmeßgerät nach Anspruch 1,
dadurch gekennzeichnet,
daß die Laserdioden (18, 19) durch komplementär schaltbare Hilfsschalter (21, 22) an eine Speisegleichspannung (23) und durch vorzugsweise synchron mit den Hilfsschaltern (21, 22) komplementär schaltbare Hochfrequenzschalter (24, 25) an die Hochfrequenz-Modulationsspannung (26, 27) anschließbar sind.

3. Abstandsmeßgerät nach Anspruch 2,
dadurch gekennzeichnet,
daß die Hilfsschalter (21, 22) in die positiven Zuleitungen und die Hochfrequenzschalter (24, 25) in die negativen Zuleitungen zu den Laserdioden (18; 19) eingeschaltet sind.

4. Abstandsmeßgerät nach Anspruch 2 oder 3,
dadurch gekennzeichnet,
daß die jeweils abgeschaltete Laserdiode (18; 19) mit einer vorzugsweise negativen Spannung (28) in Sperrichtung beaufschlagt ist.

5. Abstandsmeßgerät nach Anspruch 4,
dadurch gekennzeichnet,
daß die positive Klemme jeder Laserdiode (18; 19) über einen größenordnungsmäßig höheren Widerstand (29; 30) als der Widerstandswert der durchgeschalteten Laserdiode (18; 19) an eine vorzugsweise negative Sperr-Gleichspannung (28) angeschlossen ist.

6. Abstandsmeßgerät nach einem der Ansprüche 2 bis 5,
dadurch gekennzeichnet,
daß die positive Klemme jeder Laserdiode (18; 19) über je einen den Hilfsschalter bildenden Transistor (21, 22) an die positive Speisespannung (23) angeschlossen ist.

**7.** Abstandsmeßgerät nach Anspruch 6,
dadurch gekennzeichnet,
daß der Transistor (21; 22) sowohl von einem
Schaltsignal ($\overline{18}$, $\overline{19}$) als auch von einem Regelsignal zur Einhaltung einer vorbestimmten Lichtintensität und vorzugsweise auch zur Ausregelung von Laserdregadationen beaufschlagt ist.

**8.** Abstandsmeßgerät nach Anspruch 7,
dadurch gekennzeichnet,
daß dem kombinierten Schalt-Regel-Transistor (21; 22) ein vorzugsweise an seiner Basis von dem Schaltsignal (18, 19) und vorzugsweise an seinem Kollektor von dem Regelsignal beaufschlagter Schalttransistor (31; 32) vorgeschaltet ist.

**9.** Abstandsmeßgerät nach Anspruch 8,
dadurch gekennzeichnet,
daß in die negative Zuleitung zu den Laserdioden (18; 19) als Hochfrequenzschalter in der gleichen Richtung wie die Laserdioden (18; 19) gepolte Schaltdioden (24; 25) eingeschaltet sind, welche gemeinsam über die Induktivität (33) eines von der Hochfrequenz-Modulationsspannung (26, 27) beaufschlagten Hochpaßfilters (33, 34) an den negativen Pol der Speisespannung bzw. Masse angelegt sind.

**10.** Abstandsmeßgerät nach Anspruch 9,
dadurch gekennzeichnet,
daß der Verbindungspunkt jeder Schaltdiode (24; 25) mit der Laserdiode (18; 19) bei ausgeschalteter Laserdiode (18; 19) an einer negativen Spannung (28) liegt.

**11.** Abstandsmeßgerät nach Anspruch 9 oder 10,
dadurch gekennzeichnet,
daß zwischen der positiven Zuleitung der Laserdioden (18, 19) und dem negativen Pol der Speisespannung bzw. Masse Hochfrequenz-Entkopplungskondensatoren (35, 36, 37, 38) eingeschaltet sind.

**12.** Abstandsmeßgerät nach einem der Ansprüche 2 bis 11,
dadurch gekennzeichnet,
daß jeder Laserdiode (18; 19) eine vorzugsweise integrierte Monitordiode (18', 19') zugeordnet ist, welche vorzugsweise über eine in gleicher Richtung wie die Schaltdioden (24, 25) eingeschaltete Diode (39, 40) an den Eingang eines PI-Reglers (41) angeschlossen ist, der vorzugsweise über die Schalt-Regel-Transistoren (21, 22; 31, 32) die Laserdioden (18; 19) auf einen vorbestimmten Intensitätswert einregelt.

**13.** Abstandsmeßgerät nach Anspruch 12,
dadurch gekennzeichnet,

daß dem PI-Regler (41) auch ein die Degradation der Laserdioden (18; 19) berücksichtigendes bzw. der Einstellung der Laserdiodenhelligkeit dienendes Sollwertsignal (42) zugeführt wird, und zwar vorzugsweise für jede Laserdiode (18, 19) ein gesondertes Sollwertsignal (S1, S2).

## Claims

**1.** Distance measuring apparatus comprising a photoelectric light receiver (12) and a photoelectric light transmitter (11) which is preferably arranged alongside the photoelectric light receiver which alternately transmits high frequency modulated light wave trains to the light receiver (12) via a measurement path (14) and a reflective target arranged at its end, wherein the distance of the target from the light transmitter (11) / light receiver (12) is to be measured, and via a reference path (15) of known length provided between the light transmitter (11) and the light receiver (12), preferably within the housing (17); and also comprising an electronic evaluation circuit which preferably contains a microprocessor (16) and which evaluates the light wave trains which are alternately received by the light receiver (12) with respect to the difference of the transit time via the measurement path (14), on the one hand, and the transit time via the reference path (15), on the other hand, and which deduces from this the distance of the light transmitter (11) / light receiver (12) from the target (13), taking account of the speed of light and the known length of the reference path (15), wherein the light transmitter (11) contains two opto-electronic light transmitter elements, in particular semiconductor light transmitter elements and preferably laser diodes (18, 19), which can be switched electronically in a complementary manner, of which the one light transmitter element (18) transmits the light wave trains via the measurement path (14) and the other (19) transmits the light wave trains via the reference path (14); and wherein the light receiver (12) contains an opto-electronic light receiving element, in particular a light receiving semiconductor element, preferably a photodiode element (20) which is connected to the electronic processing circuit, characterised in that the light wave trains emitted from the light transmitter (11) and transmitted by an oscillator arrangement (43, 44, 45, 46) are high frequency modulated; in that the light receiving element (20) is connected to the one input of a multiplicatively operating mixing stage (47) of the electronic evaluation circuit, with the one output wave train signal (P') of a digital phase shifter (46) being applied to the other input of the electronic evaluation circuit, the phase shifter producing four phase pairs timewise one after the other, which are settable in a 90° grid and each have the modulation frequency, with the other output wave signal (P) being passed on further to the light transmitter (11); in that a particularly narrow band approximation filter which forms the integral (PxP') of the output product of the two output wave train signals is connected to the output of the mixing stage (47), with the output signals appearing at the output of the approximation filter (48) being evaluated in the microprocessor (16) contained in the electronic evaluation circuit to find the difference of the transit times of the light wave train via the measurement path (14) on the one hand and via the reference path (15) on the other hand.

2. Distance measuring apparatus in accordance with claim 1, characterised in that the laser diodes (18, 19) can be connected to a DC feed voltage (23) by auxiliary switches (21, 22) which can be switched in a complementary manner and can be connected to the high frequency modulation voltage (26, 27) by high frequency switches (24, 25) which can be switched in a complementary manner, preferably in synchrony with the auxiliary switches (21, 22).

3. Distance measuring apparatus in accordance with claim 2, characterised in that the auxiliary switches (21, 22) are inserted into the positive feed lines and the high frequency switches (24, 25) are inserted into the negative feedlines to the laser diodes (18; 19).

4. Distance measuring apparatus in accordance with claim 2 or claim 3, characterised in that a preferably negative potential (28) is applied to the respectively switched off laser diode (18; 19) in the depletion direction.

5. Distance measuring apparatus in accordance with claim 4, characterised in that the positive terminal of each laser diode (18; 19) is connected to a preferably negative DC blocking potential (28) via a resistance (29; 30) which is of a higher order of magnitude than the resistance value of the through switched laser diode (18; 19).

6. Distance measuring apparatus in accordance with one of the claims 2 to 5, characterised in that the positive terminal of each laser diode (18; 19) is connected to the positive feed voltage (23) via a respective transistor (21, 22) which forms the auxiliary switch.

7. Distance measuring apparatus in accordance with claim 6, characterised in that the transistor (21; 22) is acted on both by a switching signal $(\overline{18}, \overline{19})$ and also by a regulating signal for maintaining a predetermined light intensity and preferably also for regulating out laser degradations.

8. Distance measuring apparatus in accordance with claim 7, characterised in that a switching transistor (31; 32) which is preferably acted on at its base by the switching signal $(\overline{18}, \overline{19})$ and acted on at its collector by the regulating signal is connected in front of the combined switching-regulating transistor (21; 22).

9. Distance measuring apparatus in accordance with claim 8 to 9, characterised in that switching diodes (24; 25) which are poled in the same direction as the laser diodes (18; 19) are inserted into the negative feedline to the laser diodes (18; 19) as high frequency switches and are jointly connected via the inductor (33) of a high pass filter (33, 34) energised by the high frequency modulation potential (26, 27) to the negative pole of the feed voltage or to earth.

10. Distance measuring apparatus in accordance with claim 9, characterised in that the connection point of each switching diode (24; 25) to the laser diode (18; 19) lies at a negative potential (28) when the laser diode (18; 19) is switched off.

11. Distance measuring apparatus in accordance with claims 9 or 10, characterised in that high frequency decoupling capacitors (35, 36, 37, 38) are inserted between the positive feedline to the laser diodes (18, 19) and the negative pole of the feed voltage or earth.

12. Distance measuring apparatus in accordance with one of the claims 2 to 11, characterised in that a preferably integrated monitoring diode (18'; 19') is associated with each laser diode (18, 19), with the monitoring diode preferably being connected via a diode (39, 40) poled in the same direction as the switching diodes (24, 25) to the input of a PI-regulator (41), which preferably regulates the laser diodes (18, 19) to a predetermined intensity value via the switching regulating transistors (21, 22; 31, 32).

13. Distance measuring apparatus in accordance with claim 12, characterised in that a desired value signal which takes account of the degradation of the laser diodes (18; 19), or which serves for the adjustment of the laser diode brightness, is also supplied to the PI regulator (41); and indeed in that a separate desired value signal (S1, S2) is preferably provided for each laser diode (18, 19).

**Revendications**

1. Télémètre avec un récepteur de lumière (12) photoélectrique et un émetteur de lumière (11) photoélectrique disposé de préférence à côté de celui-ci et qui envoie des trains d'ondes lumineuses vers le récepteur de lumière (12) alternativement sur une section de mesure (14) et un objectif réfléchissant (13) disposé à son extrémité dont la distance par rapport à l'émetteur de lumière (11) / récepteur de lumière (12) doit être mesurée, et sur une section de référence (15) d'une longueur connue prévue de préférence dans le boîtier (17) entre l'émetteur de lumière (11) et le récepteur de lumière (12), ainsi qu'avec une électronique d'évaluation qui comprend un microprocesseur (16) et qui analyse les trains d'ondes lumineuses reçus alternativement par le récepteur de lumière (12) en fonction de la différence de durée de propagation sur la section de mesure (14) d'un côté et la section de référence (15) de l'autre et qui à partir de cela, compte tenu de la vitesse de la lumière et de la longueur connue de la section de référence (15), calcule la distance de l'émetteur de lumière (11) / récepteur de lumière (12) par rapport à l'objectif (13), dans lequel l'émetteur de lumière (11) comprend deux éléments optoélectroniques émetteurs de lumière commutables de façon complémentaire, en particulier des éléments semi-conducteurs émetteurs de lumière et de préférence des diodes laser (18, 19) desquelles l'une (18) envoie les trains d'ondes de lumière sur la section mesurée (14), l'autre (19) envoie les trains d'ondes de lumière sur la section de référence (15) et pour lequel le récepteur de lumière (12) comprend un élément optoélectronique qui reçoit tant les trains d'ondes de lumière de la section mesurée (14) que les trains d'ondes de lumière de la section de référence (15), en particulier un élément semi-conducteur récepteur de lumière, de préférence un élément photodiode (20) qui est relié à l'électronique d'évaluation, caractérisé en ce que les trains d'ondes de lumière émis par l'émetteur de lumière (11) et délivrés par un dispositif d'oscillateurs (43, 44, 45, 46) sont modulés à haute fréquence, que l'élément récepteur de lumière (20) est connecté sur l'une des entrées d'un étage mélangeur (47) multiplicatif de l'électronique d'évaluation sur une autre entrée de laquelle est appliqué l'un des signaux de train d'ondes de sortie (P') d'un déphaseur numérique (46) produisant quatre paires de phases chacune en fréquence de modulation et réglables dans le temps l'une après l'autre dans un balayage de 90°, déphaseur numérique dont un autre signal de train d'ondes de sortie (P) est transmis à l'émetteur de lumière (11), que sur la sortie de l'étage mélangeur (47) un filtre d'approximation (48) à bande particulièrement étroite formant l'intégrale (PxP') du produit de sortie des deux signaux de train d'ondes de sortie (P, P') est connecté, les signaux de sortie apparaissant sur la sortie du filtre d'approximation (48) étant analysés dans le microprocesseur (16) contenu dans l'électronique d'évaluation en fonction de la différence de durée des trains d'ondes de lumière sur la section mesurée (14) d'un côté et sur la section de référence (15) de l'autre côté.

2. Télémètre selon la revendication 1, caractérisé en ce que les diodes laser (18, 19) peuvent être connectées à une tension d'alimentation continue (23) au moyen d'interrupteurs auxiliaires (21, 22) commutables de façon complémentaire et à la tension de modulation haute fréquence (26, 27) par l'intermédiaire d'interrupteurs haute fréquence (24, 25) de préférence commutables avec les interrupteurs auxiliaires (21, 22) de façon synchrone.

3. Télémètre selon la revendication 2, caractérisé en ce que les interrupteurs auxiliaires (21, 22) sont connectés aux diodes laser (18, 19) dans les lignes électriques positives et les interrupteurs haute fréquence (24, 25) dans les lignes électriques négatives.

4. Télémètre selon l'une quelconque des revendications 2 ou 3, caractérisé en ce que la diode laser (18, 19) qui est respectivement hors circuit est alimentée de préférence avec une tension négative (28) dans le sens de non-conduction.

5. Télémètre selon la revendication 4, caractérisé en ce que la borne positive de chaque diode laser (18, 19) est connectée à une tension continue de blocage (28) de préférence négative par l'intermédiaire d'une résistance (29, 30) plus grande que la valeur de la résistance des diodes laser connectées (18, 19).

6. Télémètre selon l'une quelconque des revendications 2 à 5, caractérisé en ce que la borne positive de chaque diode laser (18, 19) est connectée à la tension d'alimentation (23) positive par l'intermédiaire de chacun des transistors (21, 22) formant l'interrupteur auxiliaire.

7. Télémètre selon la revendication 6, caractérisé en ce que le transistor (21, 22) est alimenté tant par un signal de commutation (18, 19) que par également un signal de réglage pour le respect d'une intensité de lumière prescrite et de préférence aussi pour la compensation des dégradations laser.

8. Télémètre selon la revendication 7, caractérisé en ce qu'un transistor de commutation (31, 32) alimenté de préférence à sa base par un signal de commutation (18, 19) et de préférence sur son collecteur par un signal de réglage, est intercalé en amont du transistor de réglage et de commutation (21, 22) combinées.

9. Télémètre selon la revendication 8, caractérisé en ce que dans les lignes électriques négatives vers les diodes laser (18, 19), des diodes de commutation (24, 25) polarisées dans la même direction que les diodes laser (18, 19) sont intercalées comme interrupteur haute fréquence, diodes de commutation qui sont connectées ensemble au pôle négatif de la tension d'alimentation ou de la masse par l'intermédiaire de l'inductance (33) d'un filtre passe-haut (33, 34) alimenté par la tension de modulation haute fréquence (26, 27)

10. Télémètre selon la revendication 9, caractérisé en ce que le point de jonction de chaque diode de commutation (24, 25) avec la diode laser (18, 19) se trouve sur une tension négative (28) lorsque la diode laser (18, 19) est hors tension.

11. Télémètre selon l'une quelconque des revendications 9 ou 10, caractérisé en ce qu'entre le conducteur d'alimentation positive des diodes laser (18, 19) et le pôle négatif de la tension d'alimentation ou de la masse, des condensateurs de découplage haute fréquence (35, 36, 37, 38) sont intercalés.

12. Télémètre selon l'une quelconque des revendications 2 à 11, caractérisé en ce qu'à chaque diode laser (18, 19), une diode moniteur (18', 19') de préférence intégrée est affectée, qui est connectée de préférence par l'intermédiaire d'une diode (39, 40) intercalée dans la même direction que les diodes de commutation (24, 25) à l'entrée d'un régulateur proportionnel et par intégration (41) qui est réglé de préférence par l'intermédiaire de transistors de réglage (21, 22; 31, 32) et de commutation (18, 19) sur une valeur d'intensité déterminée.

13. Télémètre selon la revendication 12, caractérisé en ce qu'un signal de consigne (42) tenant compte de la dégradation des diodes laser (18, 19) ou servant au réglage de la luminosité des diodes laser est amené au régulateur proportionnel et par intégration (41), à savoir de préférence un signal de consigne (S1, S2) séparé pour chaque diode laser (18, 19).

FIG.1

FIG.2

EP 0 439 011 B1

FIG. 3